# EUROPEAN PATENT APPLICATION

(11) **EP 1 950 670 A1**
(43) Date of publication of application: **30.07.2008**
(21) Application number: 06768132.0
(22) Date of filing: 12.07.2006
(51) Int. Cl.: G06F 17/30, G06F 13/00, G06F 17/21

(54) **DOCUMENT DATA DISPLAY PROCESS METHOD, DOCUMENT DATA DISPLAY PROCESS SYSTEM AND SOFTWARE PROGRAM FOR DOCUMENT DATA DISPLAY PROCESS**

(30) Priority: 16.09.2005 JP 2005269441
(71) Applicant: Bits Co. Ltd., 411-0943 Shizuoka (JP)
(72) Inventor: TAMURA, Takuro, Sunto-gun, Shizuoka 4110943 (JP)
(74) Representative: Dunleavy, Kevin James
(86) International application number: PCT/JP2006/313868
(87) International publication number: WO 2007/032142

(57) **Abstract**

The present invention is intended for all documents and specifically provides matters-of-interest to users and characteristic information of those matters-of-interest in correspondence to identifiers within the documents and allows related services to be utilized through these documents. An information display system 1 having an input device 11, a display device 10, a memory device 7, an information display software 15 that reads document data, and a CPU 5,
wherein the memory device 7 comprises a usable information storage unit 17 that describes multiple matters-of-interest, identifiers which identify one or more matters-of-interest from among the multiple matters-of-interest, characteristic information of each matter-of-interest, and related information of each matter-of-interest, with the association with the identification information of the matters-of-interest; and a program storage unit 14 that stores computer software executed by a CPU 5;
the system comprises functions for
receiving from the input unit the selection of an identifier type to be extracted from document data by a system software 16,
specifying an identifier pertaining to the selection in the document data read by the information display software 15,
requesting the usable information storage unit 17 or the information delivery server system 3 for the characteristic information of a matter-of-interest based on the specified identifier,
acquiring the characteristic information of the matter-of-interest based on the specified identifier from the usable information storage unit 17 or the information delivery server system 3
displaying the acquired characteristic information in a display device by embedding the information in the vicinity of the location of the identifier.
utilizing related information of the matter-of-interest via the identifier and characteristic information.

## Description

### CROSS REFERENCE TO RELATED APPLICATIONS

This application claims priority under EPC, Article 87 based upon Japanese Patent Application Serial No. 2005-269441, filed on September 16, 2005.

### FIELD OF THE INVENTION

The present invention relates to a method and a system that displays prescribed related information inserted within document data by means of a computer system and a software program that executes his method in a computer system.

### BACKGROUND OF THE INVENTION

The synergistic effect caused by the digitization of information due to the popularization of computers and the development of information distribution due to the spread of the Internet has rapidly increased the amount of information ordinary people can utilize. Various types of services have been offered for the purpose of promoting this type of information utilization. For example, blogs allow an unspecified number of people to transmit on a daily bases results of evaluations of various events, people, and products. This type of electronic information includes beneficial information for product developments and sales, health management, and various types of situation assessments. Because of this, various methods to effectively utilize this information have been proposed or put into use as illustrated below.
(1) An affiliate program that directs users to product purchase sites through document creators of documents exhibited on the Internet. This is a framework for providing a prescribed commission to a document creator when guiding a document user to a desired product purchase site and that user purchases a product by means of the document creator embedding in the document a hyperlink or software to a product related to the document and the purchase site of the product. This affiliate program offers opportunities for selling and buying various products, by allowing an undetermined number of document creators to provide various types of product advertisements.
(2) User document providing sites, including the blog mentioned above, which display banner advertisements of services and products related to the contents entered by a blogger on the same blog page. This simultaneously provides services and product information related to the currently read blog to the blog reader to stimulate the purchase of services and products.
(3) Systems have been put into practical use in which document creators insert and upload programs which display advertisements of business partners within documents to allow advertisements in accordance with content of these documents to be displayed within these documents to stimulate the purchase of products and services of these business partners.
(4) Displaying the information of services and products related to keywords which were searched out in display screens of search results and provide opportunities to purchase services and products at Internet document search sites.

The following prior patents are referred to as examples of this type of information display method.
Patent reference 1 Japanese Unexamined Patent Application Publication No. 2001-202454
Patent reference 2 Japanese Unexamined Patent Application Publication No. 2002-056027
Patent reference 3 Japanese Unexamined Patent Application Publication No. 2002-133282
Patent reference 4 Japanese Unexamined Patent Application Publication No. 2002-245084
Patent reference 5 Japanese Unexamined Patent Application Publication No. 2003-168044
Patent reference 6 Japanese Unexamined Patent Application Publication No. 2006-040179
Patent reference 7 Japanese Unexamined Patent Application Publication No. 2006-500698
Patent reference 8 Japanese Unexamined Patent Application Publication No. 2006-500699
Patent reference 9 Japanese Unexamined Patent Application Publication No. 2006-500700

The conventional methods described above have many problems which should be solved and at present a large amount of electronic information is hidden and is being widely underused.

For example, in case of the affiliate program of (1), because the contents of the documents that are provided are connected to the return of profits to the document creators, there are many instances of bias existing in the contents. In addition, since URLs of links to Web pages which display related information are separately embedded by the document creators, there are many instances of deterioration of related information over time and functions not being sufficiently obtained due to links disappearing or information before updates caused by changes in the market or changes in the structure or configuration of information delivery systems being displayed. Even further, this technology only allows documents intended by the document creator to be utilized, thus it lacks general-purpose properties and expandability.

The method of the user document providing site of (2) is a method to deliver information that can only be utilized for documents via this site and therefore lacks general-purpose properties. In addition, information that meets the desires and attributes of the document users cannot be delivered as well.

In the system of (3), the displayed contents of the information that are provided depend on the investment capability of the provider of the related information and the usage frequency of each document by document users. Consequently, information that meets the desires and attributes of the document users cannot be delivered.

The Internet document search site method of (4) does not have a framework that utilizes related information based on information entered in target documents.

Thus, because any of these methods only provide the document creator and document deliverer technology that targets the interest of the readers of the documents to lead them to specific websites, even if these methods as used, the readers (users) of the documents cannot access information or services of interest in response to the contents of the document.

The present invention aims to solve the above-mentioned problems and has an objective of providing a method, system, and software program which can precisely present information desired by a document user by means of placing characteristic information that a user wants to view adjacent to a target keyword (such as an identifier) in a applicable document or generating and displaying a list thereof, without separately performing operations for each matter-of-interest or keyword and at the same time can instantly display websites which deliver services related to this information.

### SUMMARY OF THE INVENTION

In order to achieve the objective mentioned above, the present invention is A method for displaying information related to document data along with the document data using a computer system having an input device, a display device, a memory device, a means for reading document data, and a control means, wherein the memory device comprises a data library that stores and associates among each other a matter-of-interest, elements related to this matter-of-interest, identifiers specifying each of such elements, characteristic information of each of such elements, and information related to each of such elements; and a computer software storage unit that stores computer software executed by the control means;
the control means executes, by means of reading and executing the computer software, the steps of
A) receiving from the input means the selection of the matter-of-interest to be extracted from document data,
B) specifying identifiers pertaining to the selection in the document data read by the read means,
C) searching out characteristic information and related information of the element of the matter-of-interest associated with the specified identifiers from the data library,
D) setting up the searched characteristic information and/or identifiers, so as to allow the related information regarding the element of the matter-of-interest to be viewable based on the characteristic information and / or specified identifiers, and
E) displaying the characteristic information in association with the identifiers in a display device. In addition, the present invention provides a system that suitably executes this method as well as a computer software program that executes this method in a computer system. Here, it is preferable that the step E) displays the characteristic information by embedding it in the vicinity of an identifier or overlapping in the vicinity of the position of an identifier within the document data, or by making it available as a list.

The above-mentioned "matters-of-interest" include, for example, tangibles and intangibles such as all products (personal properties, real estate) and their parts, members, collections, natural people and corporations, organizations, place names (regions), private or public services (transportation facilities, roads, medical care), entertainment events such as sports or movies, illnesses, religions, political ideas, history, sayings, education plans, qualifications, quizzes, services, and intellectual properties.

"Elements" include, for example, information that comprises each matter-of-interest, information included in each matter-of-interest, or information that specifies a matter-of-interest.

"Identifiers" include, for example, text data such as character strings, symbols, numeric values, word lists, or character string patterns included in elements of a matter-of-interest and / or which identify one or more elements of a matter-of-interest.

Characteristic information is information such as specification information of a matter-of-interest, information of a matter-of-interest in the past /current/ future forecast, evaluation or introductory information by a third party for a matter-of-interest, information that shows the completion of a matter-of-interest or process until its establishment, information of people related to a matter-of-interest and officials of a school or company, etc., or ranking information of multiple matters-of-interest or multiple elements inside a matter-of-interest. In more detail, for example, if the matter-of-interest is "books", it is information such as the author, the publisher, and the book classification, number of pages, price, cover page image, sales results, sales trends, and reader reviews. Furthermore, when the matter-of-interest is "authors", they are information such as author's age, sex, face photograph, published fields, book names, and book sales ranking. Each of such characteristic information is visually represented by text data (such as numeric values or definitions, and explanations), diagrams, movies, or animations.

According to the configuration described above, for existing document data, without performing individual operation per matter-of-interest or keyword, for a matter-of-interest that a user is interested, it is possible to display characteristic information thereof that the user may want to view uniformly or as a list on the document, and then, through identified elements of the matter-of-interest or displayed information, utilize the related information of the elements of the matter-of-interest and thereby move to a service site or obtain service information. Because of this, now ordinary users are easily able to do what only a portion of users who knew characteristic information of elements of a matter-of-interest or who had specialized knowledge could do before: comparing and understanding elements of a matter-of-interest in document data, and reaching to new discoveries, and they are also able to utilize services based on this type of information and obtain related information.

From the standpoint of the provider of a service, instead of providing a huge amount of standard documents created, processed, edited, and collected by an undetermined number of people on the WWW unilaterally, it becomes possible to deliver information customized according to the interests and preferences of each individual user who utilizes the documents by means of creating associations with the information provided by the huge amount of documents. In addition, it is also possible to guide users to utilize specific services through this customized information.

For example, information related to the books of interest to a user found within past book reviews can be effectively utilized as shown below.

At first, "books" is selected as the matter-of-interest and then "sales trends" is selected as the characteristic information. If the user browses document data, such as a book review of relevant books in this state, graphs may be displayed showing the sales trends of the books in the vicinity of the identifiers (such as the book names) representing the books detected within this document, or the identifiers and graphs may be displayed in a list format. Simultaneous with this, hyperlinks to the websites where the applicable books are sold are set in the applicable identifiers and graphs as related information of "books" (matter-of-interest). The user can easily purchase those books by clicking the identifiers or graphs with a mouse. In this manner, it is possible to realize a seamless utilization method of related information in which a user read book reviews while examining the sales results of the books, and the user can purchase a desired book right away at an Internet bookstore.

Multifaceted information related to an element of a matter-of-interest can also be provided by not just with subjective opinions or thoughts (original texts) on a book by a book reviewer but also by showing objective values in society such as sales. When a user wants to purchase the element (book), or a product or service (such as another book by the same author) related to that element (book), the product can be easily and intuitively purchased by clicking an identifier.

According to the present invention, there is provided a method, system, and software program which can precisely present information desired by a document user by means of placing characteristic information that a user wants to view adjacent to a target keyword (such as an identifier) on the applicable document or generating and displaying a list thereof, without separately performing operations for each matter-of-interest or keyword, and can instantly display websites which deliver services related to this information.

### BRIEF DESCRIPTION OF THE DRAWINGS

Fig. 1 is a schematic diagram showing the system configuration of an embodiment of the present invention;
Fig. 2 is a schema outline diagram showing the relationship of databases;
Fig. 3 is a flowchart showing the process flow.
Fig. 4 shows an example of a user interface in a user's client system;
Fig. 5 shows a characteristic information display example in a user's client system;
Fig. 6 shows an example of system operation in a user's client system;
Fig. 7 shows a basic example of characteristic information;
Fig. 8 is a schematic diagram showing the system configuration of a modified example of the present invention.

### DETAILED DESCRIPTION OF THE PREFERRED EMBODIMENTS

In the following preferred embodiments of the present invention will be described in detail referring to the drawings.

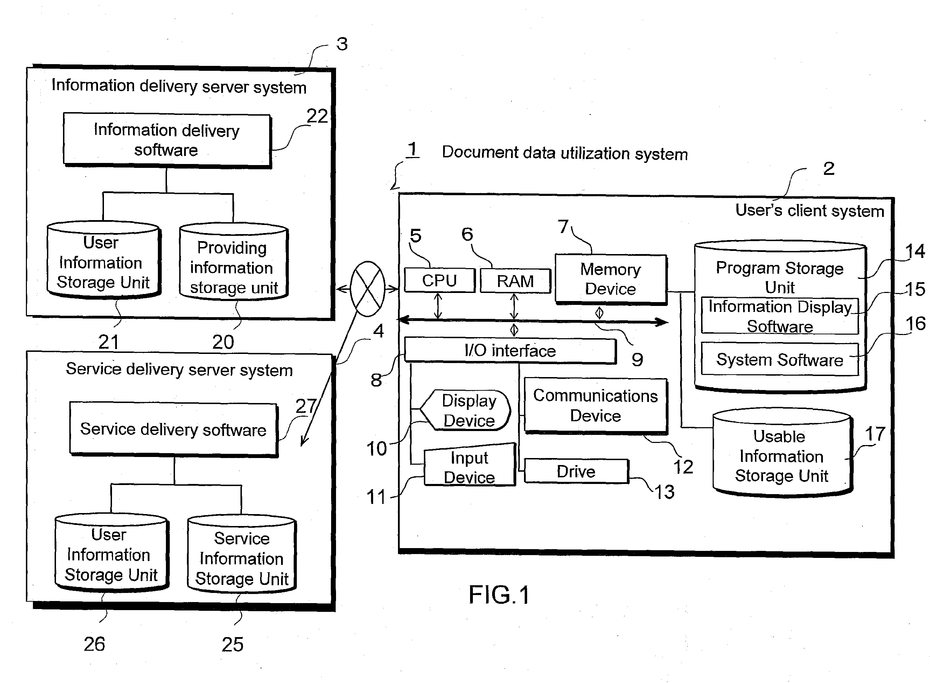

Fig. 1 shows a configuration overview of a document data management system related to the embodiment of the present invention. This system 1 is comprised by a user's client system 2 in which a computer program according to the present invention is installed and an information delivery server system 3 which are connected through a communication network such as the WWW. The user's client system 2 and the information delivery server system 3 can be connected to a service delivery server system 4 through a communication network. Each of these systems 2 to 4 is comprised by at least 1 or 2 or more general-purpose computer systems, having the same hardware configuration.

### (Configuration overview of a user's client system)

The user's client system 2 is a general-purpose personal computer and the hardware configuration has a CPU 5 (that functions as a control means) to which a memory device 7 such as a HDD or a ROM and an I/O interface (I/F) 8 are connected through a communication bus 9; and to this I/O interface (I/F) 8, a display device 10 such as an LED display, an input device 11 such as a mouse or a keyboard, a communication device 12 such as a modem, and a drive 12 for a removable storage medium such as a CD-ROM or DVD-ROM are connected. A characteristic processing function of the present invention (described later) is realized by computer software (an information display software 15 and a system software 16) that is installed in a program storage unit 14 of the memory device 7 being read to a RAM 6 by the CPU 5 and then being executed in cooperation with the OS (operating system).

The memory device 7 is equipped with the program storage unit 14 as well as a usable information storage unit 17 that assists the operations of the system software 16. This usable information storage unit 17 stores information such as matters-of-interest that are digitized, the types of characteristic information provided for each matter-of-interest, one or more elements which are information included in each matter-of-interest or information that specifies a matter-of-interest, identifiers of each element, characteristic information of each element, related information of each element, and information related to users (user information). The program storage unit 14 and the usable information storage unit 17 are fixed storage regions reserved in the memory device 7 such as a HDD. The data library of the present invention is comprised by the usable information storage unit 17 and a providing information storage unit 20 (described later) of the information delivery server system 3.

Hereupon, as will be described later, the characteristic information includes information stored in the usable information storage unit 17, information dynamically generated by the system software 16 based on information such as elements stored in this usable information storage unit 17, and information acquired from an external server system through the information delivery server system 3. Because of this, the provider of the characteristic information can directly provide characteristic information to the information delivery server system 3 independent of the user's client system 2. Therefore, an individual different from the provider of the information of a matter-of-interest can provide original characteristic information for the matter-of-interest or elements instantly. As an example, for the matter-of-interest: "books", multiple Internet bookstores can provide "inventory status", "book review information", "sales price", and "sales ranking by genre" as characteristic information immediately via the information delivery server system 3.

The characteristic information type provided for each matter-of-interest is information that includes a data type of characteristic information to be processed (such as sales or values), a type of data format (data formats of text, graphs, illustrations, images, or movies), and definitions of display formats (such as display size, scale, font, and color). The usable information storage unit 17 can also store data provided from the information delivery server system 3. Other data stored in usable information storage unit 17 will be described later.

The information display software 15 corresponds the read means of the present invention. As an example, this is software such as a web browser, a mailer, a word processor, a spreadsheet, or presentation software. This information display software 15 is equipped with a function that reads document data along with acquiring and displaying the characteristic information that the system software 16 and an information delivery software 22 (described later) of the information delivery server system 3 searched out from the usable information storage unit 17 or a data storage unit 23; dynamically generated characteristic information; and related information in the display device 10 of the user's client system 2.

### (System software function)

The system software 16 is equipped with each of the following functions. One portion of these functions can also be executed in the information display software 15 or the information delivery software 22. Details of the functions of the system software 16 will be described later referring to the flowcharts and display screen examples.
* An identifier type selection acceptance function that accepts the selection of an identifier type such as a matter-of-interest to be extracted from target document data, which is entered from the input device 11, and registers the identifier in the memory device 7.
* An identifier specifying function that specifies identifiers pertaining to the selection above in the document data read by the information display software 15.
* An information search function that searches characteristic information of and related information of the matter-of-interest's element that are associated with the specified identifiers from the above-mentioned data library.
* An encryption / decryption process function that encrypts / decrypts identifiers pertaining to the above selection and characteristic information and/or related information that was searched out.
* An information generation / process function that generates / processes other characteristic information or related information based on characteristic information and/or related information that was searched out.
* A characteristic information display function that embeds, overlaps, or lists up characteristic information that has been searched out / generated / processed at a specific position in document data for displaying the information.
* A related information reference setup function that sets hyperlinks for accessing related information within characteristic information that was searched out or specified identifiers.
* A display parameter setting function that performs various types of display setups for characteristic information or related information, etc. according to user instructions.
* A control information detection function that detects identification information of a document creator or command character strings (control command information) described in a target document.
* A creator identification information notification function that notifies the service delivery server system 4 of creator identification information detected by means of the control information detection function.
* An operation control function that controls various types of operations in specified areas of this document according to the command character strings detected by means of the control information detection function.
* A server access function that accesses the service delivery server system 4 based on related information.

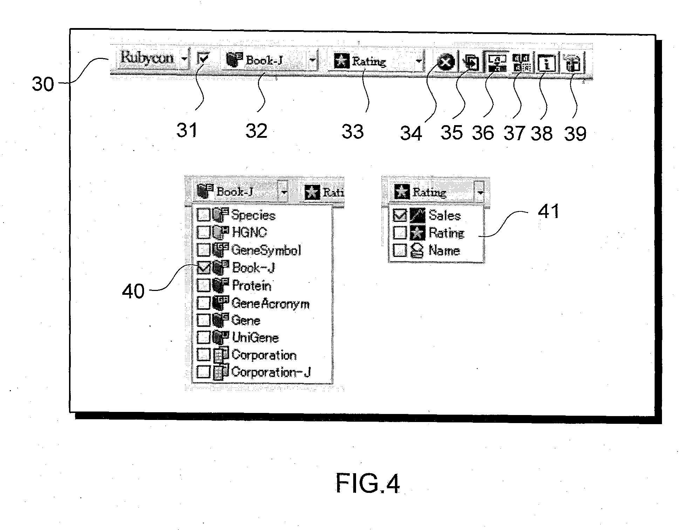

Hereupon, the identifier type selection acceptance function is a function that displays the input screen illustrated in Fig. 4 in the display device 10 and then accepts the selection of an identifier type such as a matter-of-interest from a user. Here, it is possible to accept multiple identifier types for one document as well as accept and resister one identifier type that a user wants to display across multiple documents.

The information search function includes a function that searches characteristic information from the usable information storage unit 17 and a function that transfers the specified identifiers to the information delivery server system 3 (information delivery software 22) and then instructs to search characteristic information or related information related to this identifier. Storing all characteristic information and related information for multiple identifiers of multi-faceted matters-of-interest in the usable information storage unit 17 (user's client system 2) in advance is not realistic and it is particularly difficult to acquire and store the most recent information such as sales rankings. Because of this, although characteristic information updated rarely and frequently utilized is accumulated in the usable information storage unit 17 or characteristic information acquired from the providing information storage unit 20 is accumulated as a cache for a fixed time period, when characteristic information has a significance if it is the latest information or a new matter-of-interest and identifiers are selected, it is preferable that they are acquired on a preferential basis from the providing information storage unit 20. In the description below, the searching of the characteristic information or related information includes searches and search instructions using the system software 16 as well as all searches using the information delivery software 22.

In this embodiment, the following detailed functions are included in the information generation / process function.
1) A function that dynamically generates characteristic information, such as images, graphs, animations, and movies based on the characteristic information and related information that was searched out.
   This function displays text data of characteristic information using a scrolling action, visually processes numeric values that were searched out as a graph or table, cuts and processes specified ranges of images, and/or temporally / spatially cuts and processes animations and movies. When the characteristic information that was searched is a data type identical to that of document data, such as text or numeric values, even if it is embedded and displayed in the vicinity of an identifier, it will end up being buried within the document resulting in poor visibility. Because of this, it is preferable to use this function to improve the visibility and facilitate effective utilization of the information. In addition, this function and the display parameter setting function or the operation control function can work together to control the display method of the characteristic information according to the user settings.
2) A function that searches or dynamically generates characteristic information of elements of a matter-of-interest from a data library and related information of the elements of the matter-of-interest based on specified identifiers and the user information stored in the memory device 7.
   This function registers in advance user information (such as languages used, addresses, medical history / condition, hobbies, and display format of characteristic information) in the user's client system 2 and then searches or generates characteristic information that matches this user information. The users themselves can customize the types and attributes of the characteristic information to be searched by means of using this function.

In addition to the above-mentioned functions in this embodiment, the related information reference setup function is also equipped with a function that establishes hyperlinks in which identification information and characteristic information of the creators of target documents are embedded in the characteristic information and identifiers mentioned above. When a user (information display software 15) using a hyperlink established in this manner moves to a website that displays related information, the information of the document creator can be automatically delivered to that website making it possible to easily and reliably execute an affiliate program.

In more detail, the creator identification information notification function is a function that searches document creator information embedded in a document and then notifies the service delivery server system 4 when a user utilizes a hyperlink set in related information displayed in this document. This notification function is realized by the document creator describing their own ID within a hyperlink and then asynchronously communicating with a service delivery software 27 (described later). As an example, when using this function to move to a specific website from a hyperlink set in an identifier of this document, the document creator can be easily identified on the server (service delivery server system 4) side of the applicable website. Therefore, it is possible to easily and reliably execute an affiliate program. Furthermore, since the identification information of the document creator is automatically sent when a hyperlink embedded with identification information of the document creator is established by the related information reference setup function, this notification function can be omitted or simplified.

In more detail, the operation control function is a function that preferentially provides specific characteristic information or related information to a user when the information display processing according to the present invention is executed for a target document. For example, if the document creator or editor wrote a command for automatically setting a URL of a website partnered with this person (creator) in a character string of specific characteristic information or related information, the system software 16 (operation control function) will read this command and execute the indicated process. Using this function makes it to possible to easily guide users to specific websites and efficiently achieve an affiliate program.

### (Configuration overview of an information delivery server system)

The information delivery server system 3 is a web server established and operated by a company (information delivery company) that provides information to the user's client system 2 through the WWW network. This information delivery server system 3 is equipped with the providing information storage unit 20 that stores the characteristic information of a matter-of-interest associated with the identification information (ID) of the matter-of-interest, a user information storage unit 21 that stores login information of the user, and the information delivery software 22 that searches required information from the providing information storage unit 20 and then processes as needed and transfers this information to a memory device when accessed from the information display software 15 of the user's client system 2.

Hereupon, although an information delivery company means a company that mainly collects and creates databases of various types of information transmitted on the WWW network by individuals, business enterprises or associations (information providers) as well as centrally manages information such as copyrights, there are also cases that it is an information provider. When an information provider is an information delivery company, a home PC, etc. will comprise the information delivery server system 3. In addition, descriptions and illustrations of publicly known functions such as user authentication and encryption / decryption of information will be omitted.

The information delivery software 22 has a function that acquires user information from the user's client system 2, references the user information storage unit 21, specifies individual information of the user, and then searches and generates characteristic information that matches this user. As an example, for characteristic information "sales price" in the matter-of-interest "books", a discount price that is based on a bonus plan (such as a coupon) given to a user in response to purchase history of this user at a specific bookstore, a special price for users who have certain attributes (such as age, sex, address, or business), or symbols and character strings or symbols that represent whether this user has already made a purchase or placed an order at the bookstore, are generated as characteristic information and are sent to the user's client system 2.

It is also possible to update characteristic information displayed in a target document in real-time and provide a streaming display of moving pictures by means of exchanging information using a method such as asynchronous communication between this information delivery software 22 and the information display software 15 of the user's client system 2 and the system software 16. For example, characteristic information "inventory status" of the matter-of-interest "books" can be updated and delivered at fixed intervals and video images of specific roads can be provided using characteristic information "traffic camera" of the matter-of-interest "roads."

### (Configuration overview of a service delivery server system)

The service delivery server system 4 is a web server that functions to allow service providers such as companies or individuals to provide various services on the WWW network.

As described above, by means of this service provider forming an affiliation with information delivery companies (including information providers), users who utilize the system 1 of this embodiment can be directed to your own web sites and specific services preferentially utilized (refer to notification function and operation control function of document creator information). In addition, although the creator of a document or the person who uploads a document (information provider) do not need to form an affiliation with these companies, when participating in an affiliate program, it is necessary to form an affiliation with a service provider who provides affiliate programs using, for example, member registration that involves an agreement to an affiliate contract.

The service delivery server system 4 is equipped with a service information storage unit 25 that stores information related to services corresponding to matters-of-interest in the memory device, a user information storage unit 26 that stores user login information, and a service delivery software 27 that utilizes identification information (ID) of matters-of-interest and user identification information (user ID) provided from the user's client system 2 to provide services related to applicable matters-of-interest to applicable users.

The service delivery server system 4 can provide services independent of the user's client system 2 and / or the information delivery server system 3. In more detail, a third party other than an information provider of matter-of-interest information or characteristic information can implement their own information delivery service to deliver elements or the elements identifiers for already existing matters-of-interest. As an example, for the matter-of-interest "books", multiple Internet bookstores can provide their own URLs of their store's web pages where the applicable book can be purchased without regard to the publisher or author of that book or the person who provides book reviews (documents). The URLs to be provided are stored in the user's client system 2 or the information delivery server system 3 of a partner information provider, and when a user selection is received through the input device 11 or when there is access from a user (the user's client system 2), a URL is provided being association with characteristic information or an identifier.

### (Data structure)

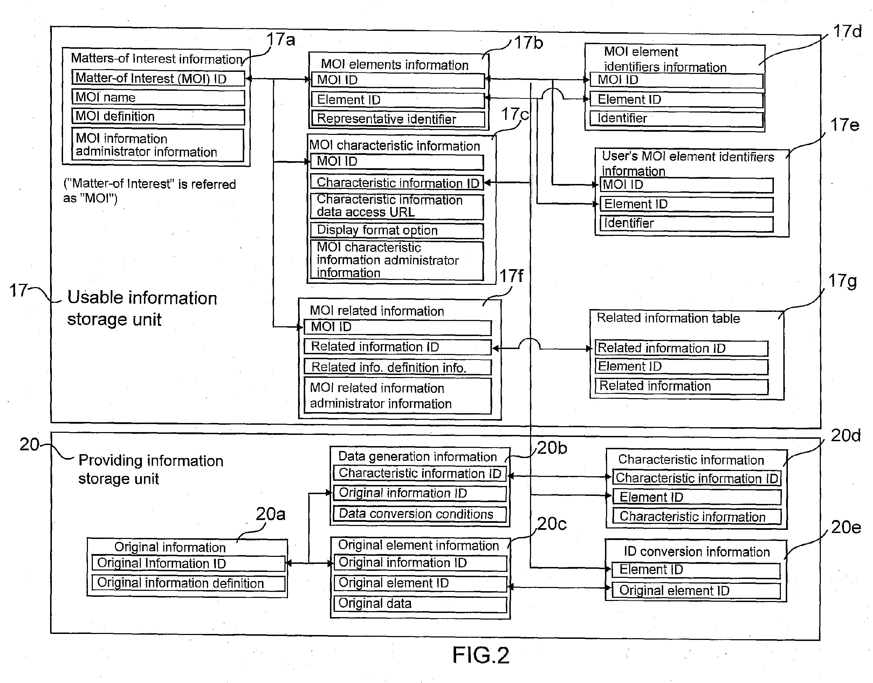

Next, the data stored in the usable information storage unit 17 and the providing information storage unit 20 will be described in detail referring to Fig. 2. This data consists of data element groups individually linked by a file system, a relational database, or hyperlinks that allow the tables explained below and storage units to mutually reference data using matter-of-interest IDs, etc.

At first, the usable information storage unit 17 comprises a Matters-of-interest information table 17a, a Matter-of-interest elements information table 17b, a Matter-of-interest characteristic information table 17c, a Matter-of-interest element identifiers information table 17d, an User's matter-of-interest element identifiers information table 17e, a Matter-of-interest related information table 17f, and a Related information table 17g.

Matter-of-interest IDs (master IDs related to types of matters), matter-of-interest names, and definitions of matters-of-interest are stored in the Matters-of-interest information table 17a. All tangibles (personal property, real estate) and intangibles are included as matters-of-interest. For example, products, foodstuffs, music, books, CDs, DVDs, plants / animals, interiors, clothes / ornaments, computer related equipment, software, industrial goods, parts, members, tools, toys, collections, vehicles, real estate, people, schools, companies, countries, place names (regions), transportation facilities, routes, roads, political parties, sports types/ stadiums / tournament names/concerned bodies/concerned parties, entertainment types such as music and movies/theater/performance locations/titles/concerned bodies such as promoters or patrons/concerned parties, illnesses, health, incidents, religions, political ideas, history, sayings, education plans, qualifications, quizzes, services, or any type of intellectual property.

Information (matter-of-interest IDs, element IDs, representative identifiers) related to individual elements included in target matters-of-interest are stored in the Matter-of-interest elements information table 17b. For example, elements of the matter-of-interest "books" include the New Testament, the Little Prince, Grimm's Fairy Tales, Illustrated Encyclopedia of European Poultry and others.

Matter-of-interest IDs, characteristic information IDs, characteristic information data access URLs, display format options, and matter-of-interest characteristic information administrator information are stored in the Matter-of-interest characteristic information table 17c. For example, characteristic information for a matter-of-interest such as books includes the publisher, year of publication, number of pages, weight, and sales trends.

Here, the characteristic information data access URL is a URL that allows access to characteristic information data using matter-of-interest IDs, element IDs, and display format options as parameters. For this characteristic information data access URL, user information may also be set as a parameter. In addition, the display format options are the display format of characteristic information that can be selected by a user. For example, they include display size, scale, display color, background color, type of graph, upper limit / lower limit, straight lines / logarithmic lines, data labels, and operations when clicking display data, etc.

Matter-of-interest IDs, element IDs, and identifiers which represent these element IDs are stored in the Matter-of-interest element identifiers information table 17d. For example, "Isaac Asimov", "Isaac Azimov", and "George E. Dale" are registered as the identifiers of an element which has the representative identifier "Isaac Asimov". Records stored in this table 17d and the user's Matter-of-interest element identifiers information table 17e are collected for each element ID classified using a matter-of-interest ID and form an identifier dictionary for the applicable user for the matter-of-interest.

Identifiers uniquely defined for a specific matter-of-interest by a user and the IDs of matter-of-interest elements related to the aforementioned identifiers are stored in the User's matter-of-interest element identifiers information table 17e.

Matter-of-interest IDs, related information IDs, related information definition information, and matter-of-interest related information administrator information are stored in the matter-of-interest related information table 17f. In other words, the table 17f stores the types of related information that can be provided to a target matter-of-interest. For example, "Internet bookstore accessing URL" "outline of book" may be the information related to the matter-of-interest "books."

Hereupon, the related information definition information stores information of a method for acquiring related information based on a matter-of-interest ID, element ID, document creator information, and user information. For example, as related information, the related information definition information stores definition information used for setting a hyperlink (URL) that allows a transfer to a related site or definition information used for acquiring related information stored in the usable information storage unit 17 and the providing information storage unit 20. As document creator information, identification information of a creator (such an ID, full name, or pen name), or an ID of characteristic information associated with a specific element or all elements specified by a creator are included. As user information, for example, languages used by a user, residential area, health history / condition, hobbies, and display formats of characteristic information are included. These types of user information are stored being associated with a user ID. The system software 16, based on this definition information, searches related information that corresponds to attributes of the document creator and the user, and also dynamically creates and processes the information as necessary.

Related information IDs, element IDs, and related information are stored in the related information table 17g. This table 17g can also be stored in the providing information storage unit 20. When acquiring related information from the usable information storage unit 17 and the providing information storage unit 20 according to definitions stored in the matter-of-interest related information table 17f, the related information of the related information table 17g is utilized.

The providing information storage unit 20 is equipped with an original information table 20a, a data generation information table 20b, an original element information table 20c, a characteristic information table 20d, and a ID conversion information table 20e.

The targeted characteristic information here includes, for example, information prepared in advance for each individual record such as characteristic information "book cover images" of the matter-of-interest "books", values actually metered / measured such as characteristic information "weight", as well as information that undergoes information processing from existing original information or databases for each element, such as characteristic information "Sales trend of last four weeks."

Original information IDs and definitions of original information are stored in the original information table 20a. Information (characteristic information IDs, original information IDs, and data conversion conditions) used to generate characteristic information from original information is stored in the data generation information table 20b. The information described here for the data conversion conditions includes locations where original information exists (such as memory regions) and information related to conversion frequency, timing, and format. Original information IDs, original element IDs, and original data is stored in the original element information table 20c.

For elements of each matter-of-interest, characteristic information corresponding to each type of matter-of-interest characteristic information is stored in the characteristic information table 20d. Element IDs and original element IDs corresponding to these element IDs are stored in the ID conversion information table 20e. The correspondence between characteristic information and original element information is set by referring to this table 20e.

From among the information described above, characteristic information can be generated from original information based on information stored in the original information table 20a, the data generation information table 20b, the original element information table 20c, and the ID conversion information table 20e. In addition, when there is no original element information corresponding to matter-of-interest elements and thus characteristic information cannot be generated, text or images (such as a message "no data" or an icon "?") indicating there is no characteristic information can be generated and displayed by the information delivery software 22.

It is preferable to use a public key to encrypt the above-mentioned information by means of the encryption / decryption process function of the system software to prevent information such as identification information of a data creator and/or an identifier dictionary or characteristic information developed by a data creator (such as creating or processing) from being altered by a third party. In more detail, it is effective to use a private key to encrypt data developed by a data creator such as elements of matters-of-interest, identifiers, characteristic information, and related information and then use a public key made public by this creator to decrypt and use the information.

By means of simplifying the data structure and ensuring independence in this manner together with encrypting the data, it becomes easy for a third party to freely combine and develop elements of matters-of-interest, identifier dictionaries, characteristic information, and related information separately or in multiple information groups and then deliver or distribute the information in order to be utilized in this system.

### (Steps of information display processing)

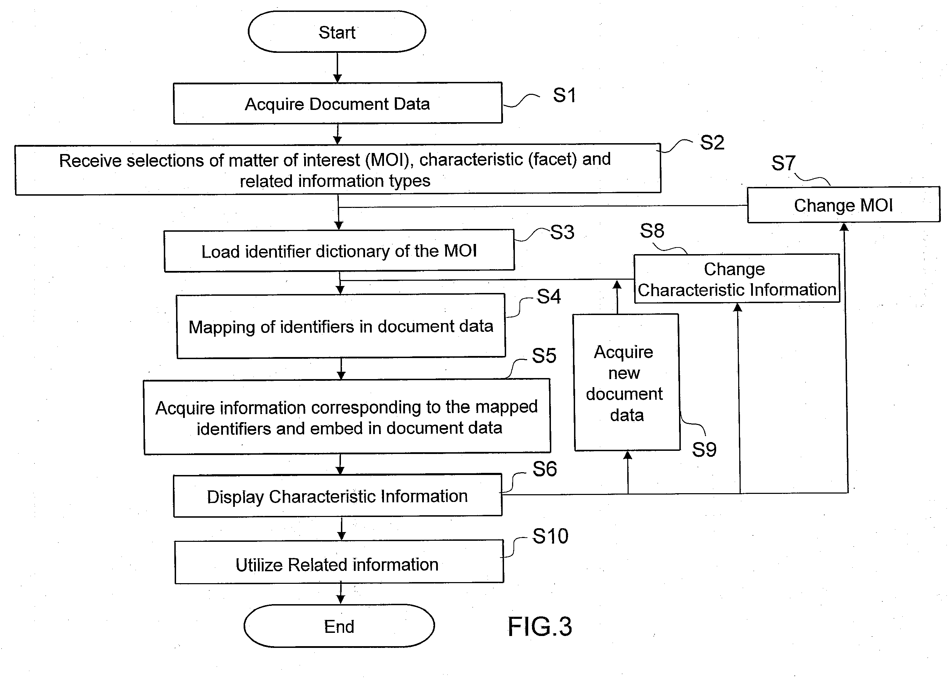

Next, the steps of information processing executed by the system software 16 will be described referring to the flowchart of Fig. 3. In the description below, "books" is given as an example of a matter-of-interest of an information delivery target, "sales trends" as an example of characteristic information (content of information to be added), and an "Internet bookstores" as an example of related information that can be utilized through an identifier and / or characteristic information.

At first, when the information display software 15 acquires digitized document data and displays in the display device 10 (step S1), the system software 16 accepts the selection from a user via the input device 11, concerning which matter-of-interest included in that document data and which type of characteristic information is to be acquired as the additional information and which type of related information is wanted (step S2). In this example "books" is selected as a matter-of-interest, "sales trends" is selected as characteristic information, and "Internet bookstores" is selected as related information. This system software 16 loads from the usable information storage unit 17 an identifier dictionary (see the Matter-of-interest element identifiers information table 17d and the user's Matter-of-interest element identifiers information table 17e in Fig. 2) that corresponds to the matter-of-interest "books" that was selected (step S3). This identifier dictionary is a collection of terms which can identify specific elements included in a target matter-of-interest such as "books", and multiple terms (identifiers) exist which specify one element.

Next, the system software 16 searches (maps) identifiers from the document data and then identifies as elements of the target matter-of-interest (step S4). Adjacent to the identifiers of the elements identified by this mapping or in a list, links to the information delivery software 22 that statically or dynamically delivers characteristic information related to that element (step S5) is embedded.

The information display software 15 acquires characteristic information according to the links embedded within the document data and displays the characteristic information by deploying it inside the document data display, overlapping the document data, or listing up (step S6). In more detail, the characteristic information may be entered in the vicinity of the identifiers included in the text of the target document, a window or text box where the characteristic information is described may be opened on top of the document, or the display screen may be divided into multiple frames where the characteristic information may be displayed in margins such as notes or thumbnails. This type of characteristic information display format can be set in advance on the system side or can be selected by the user.

When an identifier searched out in step S4 is a multiple meaning identifier which simultaneously represents multiple elements, it is preferable for the information display software 15 to display text (letters such as "multiple meaning identifier" or "M") indicating a multiple meaning identifier or an image (an icon representing multiple meaning identifier), display multiple elements side by side which this identifier represents, or generate a user interface (such as a popup menu) that allows the elements targeted for display to be selected and then display them in the display device 10. The information display software 15 executes display processing of characteristic information for the element selected in this target matter-of-interest element selection menu.

When a change to a matter-of-interest is received from a user after the characteristic information is displayed (step S7), the system software 16 and the information display software 15 execute the processes of steps S3 to S6 based on the changed matter-of-interest. In addition, when a change to the characteristic information is received (steps S8), the system software 16 and the information display software 15 execute the processes of steps S4 to S6 according to the characteristic information related to the change. Even further, when new document data is acquired (step S9) and the same matter of interest and characteristic information are continuously selected, the processes of steps S4 to S6 will execute for the new document data.

After the above-mentioned processes are executed, the user can utilize the related information of the target matter-of-interest by means of clicking the identifiers specified within the document and / or the character strings of the displayed characteristic information as well as by selecting the information from a popup menu linked to this characteristic information (step S10). For example, when a user views characteristic information "sales trends" of the target matter-of-interest "books" and the content of a target document (book review) and decides to purchase a book, the user can move to the purchase page of the Internet bookstore he selected himself in step S2 and then seamlessly switch to the purchase procedure of the book.

### (Display screen example)

Next, the operation and function of the present invention will be described in detail referring to the examples of the display screens in Fig. 4 to Fig. 6.

At first, Fig. 4 shows an example of a user interface in the user's client system 2. In this embodiment, the user interface is implemented as a toolbar 30 of a web browser. Multiple functions can be simply used by means of implementing multiple commands in a toolbar.

This toolbar 30 is provided with a checkbox 31 used to switch between turning the information display ON / OFF, a matter-of-interest pull-down button 32 used to select matters-of-interest, a characteristic information pull-down button 33 used to select characteristic information, an interrupt button 34 used to interrupt mapping of identifiers, a restart button 35 used to restart mapping of identifiers, a display switch button 36 used to turn ON / OFF the highlighting of identified identifiers, a display quantity designation button 37 used to only allow an assigned quantity to be displayed for identical identifiers mapped within a display region, a switch button 38 used to turn the display of a mapping information panel ON / OFF, and an option button 39 used to open a dialog box to set operation options.

By setting the display ON / OFF switching checkbox 31 continuously in an ON (display) state while a web browser (information display software 15) displays multiple documents using hyperlinks; it becomes possible to automatically execute the information display processing of this embodiment for the multiple documents (web pages).

When the matter-of-interest pull-down button 32 is clicked, a matter-of-interest pull-down menu 40 will be displayed. When only one matter-of-interest is selected, the name of the selected is preferably displayed in the matter-of-interest pull-down button 32. One or multiple selected matters-of-interest can be confirmed and the selection of a matter-of-interest can be switched using the pull-down menu 40.

When the characteristic information pull-down button 33 is clicked, a characteristic information pull-down menu 41 will be displayed. A list of one or more types of characteristic information for selected matters-of-interest will be displayed in the characteristic information pull-down menu 41. For example, when "Books-J (Japanese books)" is selected as a matter-of-interest, "Sales (number sold)", "Rating (reader review information of the books in an Internet bookstore)", and "Name (book title)" will be displayed as the types of characteristic information. When multiple matters-of-interest are selected, the characteristic information of each matter-of-interest is delimited by a, for example, delimiter line and then displayed in order. When only one type of characteristic information is selected, it is preferable for the name of the selected characteristic information to be displayed in the characteristic information pull-down button 33. The user can confirm one or multiple selected characteristic information as well as switch the selection of characteristic information using the characteristic information pull-down menu 41.

The interrupt button 34 is used when you want to interrupt a mapping process midway that is being executed for very long web pages or web pages with an excessive number of characters or when processing is taking a long time due to the communication environment. The restart button 35 is convenient when restarting after changing identifier mapping parameters. In addition, the display quantity designation button 37 is effective when you want to limit the number of information displays to avoid congestion in documents which contain a plurality of identical elements.

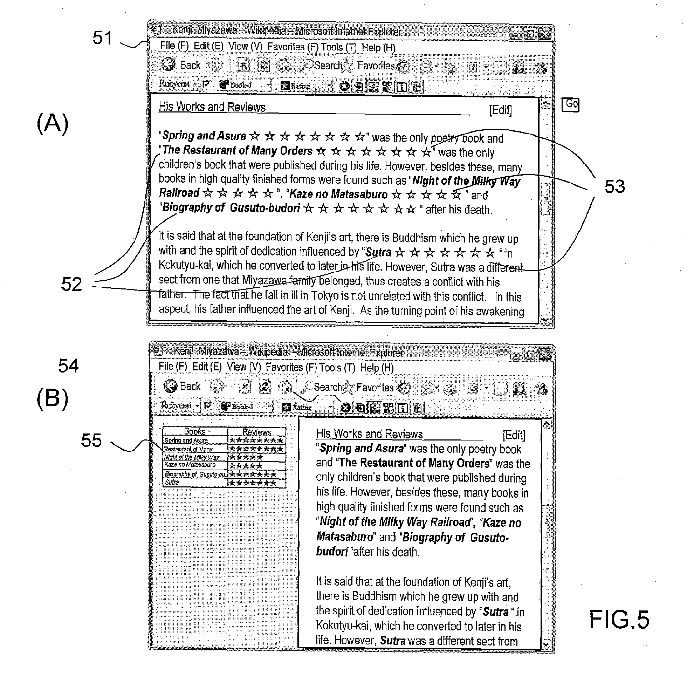

Fig. 5 shows an example of the information display software (such as a web browser) 15 and the system software 16 of the user's client system 2 running and document data displayed. In more detail, Fig. 5 (A) shows a display screen 51 that displays characteristic information in the vicinity of identifiers and Fig. 5 (B) shows a display screen 54 that displays characteristic information as a list. A matter-of-interest "Books-J" and characteristic information "Rating" are selected in these examples. Identifiers, such as "Spring and Asura" and "Restaurant with many orders" which represent "books", are specified from document data and displayed highlighted. In addition to this, stars 53 that show reader's ratings (characteristic information) are displayed next to the identifiers 52 in the display screen 51 of Fig.5 (A). Identifiers and characteristic information are displayed as a list 55 on the screen in the display screen 54 of Fig. 5 (B).

The characteristic information 53, such as a pictograph, shown in these examples is dynamically generated by the system software 16 or the information delivery software 22 by referring to the original element information table 20c. That is, this characteristic information is not stored beforehand in a memory device of the client system 2 or the information delivery server system 3 but is generated when a display of the characteristic information is requested from the user's client system 2. Because of this, the user can operate the user's client system 2 and change the settings or change the display format at any times and then display the information based on the most recent original information.

The user can display related information corresponding to an element of a matter-of-interest by means of moving the mouse cursor over an identifier 52, characteristic information 53, or list 55 and clicking the mouse. For example, a web site of an Internet bookstore that sells a target matter-of-interest (book) can be instantly displayed using a hyperlink established in the character string of the identifier 52.

Here, the related information can be linked to specialized identifier dictionaries provided by related information providers or general-purpose identifier dictionaries such as international book libraries which describe ISBN codes (International Standard Book Code). Therefore, it is possible for an Internet bookstore to establish a hyperlink to product information or their product purchase site as related information for this type of specialized / general-purpose identifier dictionary. It is also preferable that the related information is associated with the identification information of the creator of an identifier dictionary or the creator (provider) of characteristic information, so that when an identifier is clicked, the related information provided by the creator of the identifier dictionary is displayed by default and when characteristic information is clicked, the related information provided by the creator of the characteristic information is displayed by default. In addition, the user can display a popup menu by moving the mouse cursor over the identifier 52 or the characteristic information 53 and right clicking and then select the related information to be displayed from this menu. When identifiers such as ISBN codes which have a pre-determined format can be utilized, it is effective to register a character string pattern that represents the format of the identifiers in the dictionary instead of listing the identifiers in the dictionary. As an example, an ISBN code can be represented by a Perl regular expression "\b(ISBN)*(\d\-\d{4}\-\d{4}\-\d|\d {10})\b."

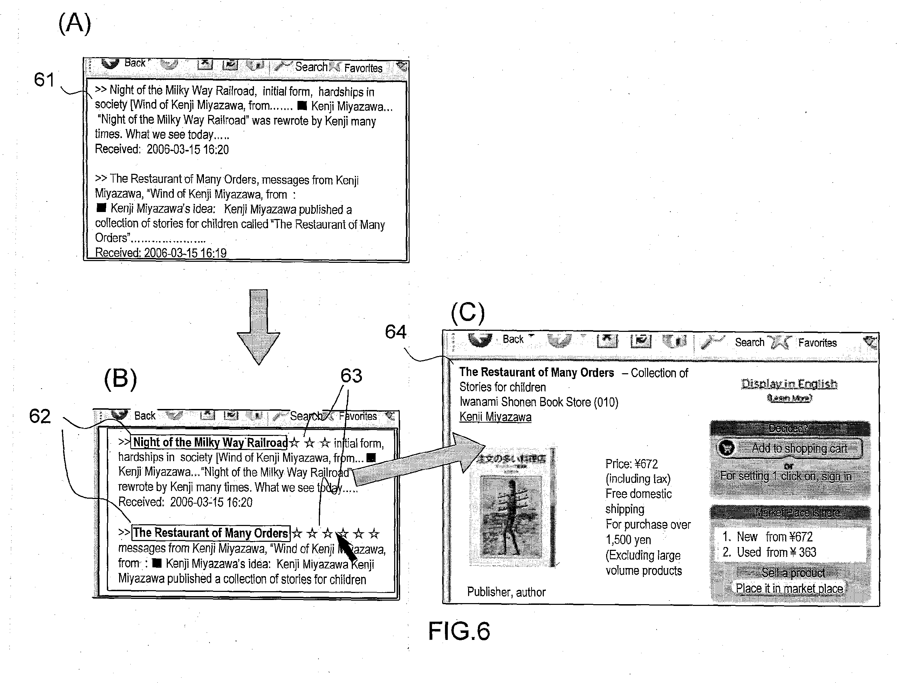

Fig. 6 is a conceptual view showing an example of system operation in the user's client system 2. As shown in Fig. 6 (A), when the matter-of-interest "Japanese books" and characteristic information "reader review information" is selected and the system software 16 is executed in the document 61 that is displayed in the display device 10 by the information display software 15 (such as a web browser), a plurality of "Japanese books" 62 (identifiers) will each be displayed highlighted and "reader review information" (characteristic information) adjacent to these identifiers will be displayed as multiple stars 63 as shown in Fig. 6 (B). In this state, if the mouse cursor is moved over the "Restaurant with many orders" 62 or the stars 63 displayed adjacent to this and clicked, the purchase page 64 of this book in the book purchase site will be displayed as shown in Fig. 6 (C).

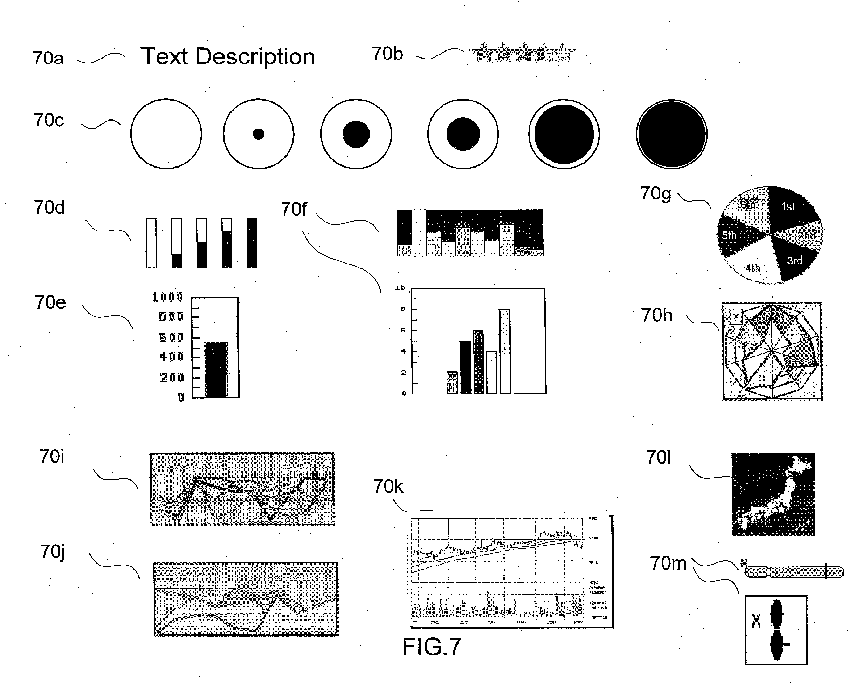

Fig. 7 shows examples of display formats of characteristic information that can be dynamically generated from the original element information table 20c. For example, they are text 70a, a pictograph (multiple star marks) 70b, a circular filled graph 70c, a bar chart 70d, a bar chart with scale marks 70e, multiple bar charts 70f, a pie chart 70g, a radar chart 70h, a line graph 70i, an area graph 70j, a stock chart 70k, position information on a map 701, or locus information (position information on a chromosome 70m. For each of these it is possible to specify the display size, the color, the vertical / horizontal display, lower / upper limit values, or straight line / logarithmic conversion concerning the original information. In addition to basic symbols such as ○, Δ, □ for the pictograph 70b, the user can also specify personally registered pictures and display units.

The display format of characteristic information can be setup utilizing the user interface in the user's client system 2 described above. Information can be displayed in a preset size, scale, and region; and an enlarged image display corresponding to a mouseover in a characteristic information display region; scrolling of a display region, and changing of a display region / a display size / a display scale, by means of mouse operations; and for various graphs, minimum and maximum values, logarithmic axis, and color and lines of series can be set. Even further, in animations and moving pictures it is also possible to setup the start and stop of streaming distribution of animations, and also playback, rewind, continuous playback, visual fields change, and line of sights change for animations, by means of mouse operations.

### (Processing invisible data)

Next, processing when data is invisibly embedded in a target document will be described.

In order to make documents (web sites) be searched and viewed by users using various keywords in a search engine, document creators and editors want to include various easy to search keywords in documents related to the contents of the documents. If this type of data is visibly displayed within a document, there is a chance that the document will be difficult to read and the formatting will worsen and is therefore kept away from users. Because of this, there are more occurrences of various types of data being invisibly embedded by document creators. In addition, there are also instances of information that defines information within a document being invisibly embedded such as Semantic Web. It is also possible to invisibly embed data for the execution of the various functions of the system software 16 in this embodiment.

As the data embedded in a document, text data that is similar to visible data in a target document such as the above mentioned keywords, specific commands (control command information), identification information and characteristics information of a creator are included. Detailed processing of each of the data type is explained in below.

### (Processing when text data is embedded)

When text data invisibly described by a document creator is included in target document data, the system software 16 uses the identifier specifying function to not only specify information visibly displayed in that document but also specify identifiers within invisible data. The system software 16 also uses the information search function, the characteristic information display function, and the related information search setting function to execute processes so as to allow characteristic information and related information for identifiers within this type of invisible data to be viewed. In more detail, the display screen may be divided into multiple frames and the characteristic information may be listed in the margin of the page as well as displayed at specified positions such as the side or the end of sentences. Because of this, the possibility of target documents being searched and viewed improves as well as providing opportunities for users who viewed the document to use the information. When working with Semantic Web, characteristic information and related information may be embedded in the vicinity of the position of visible text which is defined by the invisibly embedded information that is specified as an identifier.

### (Processing when specific commands (control command information) are embedded)

When a specific command is invisibly embedded by a document creator in a target document, the system software 16 uses the control information detection function to detect that command and then use the operation control function to execute the processing according to that command. This processing itself is the same as the processing for the visible data described above. Since control commands are qualitatively different from document data, they are expected to be invisibly embedded most of the time.

### (Processing when the identification information and characteristic information of a creator is embedded)

When identification information of the creator or the type of matter-of-interest or characteristic information intended by the creator is invisibly embedded in the target document by the document creator, the system software 16 uses the control information detection function to detect that identification information, etc. Thereafter, this system software 16 uses the information search function to search the identifiers and characteristic information within this document from the above-mentioned data library for the type of matter-of-interest or characteristic information intended by the creator and then uses the characteristic information display function to display them within the document data. In addition, the related information reference setup function and the document creator identification information notification function embed the above-mentioned identification information detected in a hyperlink used to access related information and then notify the service delivery server system 4. This makes it possible to guide users to specific web sites and deliver information without the user being aware of the intent of the creator.

### (Modified example)

This invention is not limited to the embodiments described above and can be modified in many different ways in a range that does not change the intent of the invention.

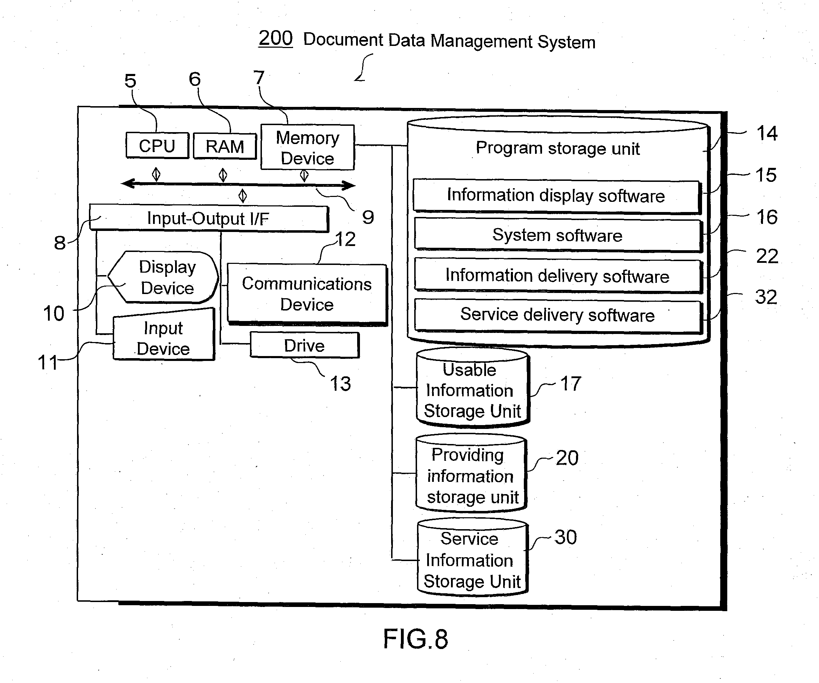

For example, although this system 1 is comprised by the user's client system 2 and the information delivery server system 3 in the embodiments above, it can be comprised by only a user's client system or comprised including the service delivery server system 4. For the former, the providing information storage unit 20, the service information storage unit 25, the information delivery software 22, and the service delivery software 27 are provided in the user's client system 200 as shown in Fig. 8. The characteristic information for this case can also be downloaded from a web server through the WWW or introduced from a storage medium such as a CDROM.

The types and display formats of matters-of-interest, elements, characteristic information and related information are not limited to the embodiments above and various types can be used.

Even further, although the user's client system 2, the information delivery server system 3, and the service delivery server system are comprised such that they are connected to each other through the WWW network in the embodiment described above, they can also be connected through a closed network such as a LAN. For example, a host computer inside a company may be the information delivery server system 3 and / or the service delivery server system 4, and the client terminals of the employees or customers may be connected to the host computer through a dedicated line and characteristic information (department in charge, sales results and market share of company's products or competition's products, stock prices of one's company and other companies, requests and evaluations from customers) may be displayed for specific documents, hyperlinks to pages to related departments within the company may be set in characteristic information and identifiers (product names, business offices, etc.).

## Claims

1. A method for displaying information related to document data along with the document data using a computer system having an input device, a display device, a memory device, a unit for reading document data, and a control unit, wherein said memory device comprises a data library that stores and associates among each other a matter-of-interest, elements related to this matter-of-interest, an identifier specifying each of such elements, characteristic information of each of such elements, and information related to each of such elements; and a computer software storage unit that stores computer software executed by the control unit; and
said control unit executes, by means of reading and executing the computer software, the steps of
A) receiving from the input unit the selection of the matter-of-interest to be extracted from document data,
B) specifying an identifier pertaining to the selection in the document data read by the reading unit,
C) searching out characteristic information and related information of the element of the matter-of-interest associated with the specified identifier from the data library,
D) setting up the searched characteristic information and/or identifier, so as to allow the related information regarding the element of the matter-of-interest to be viewable based on said characteristic information and / or specified identifier, and
E) displaying said characteristic information in association with the identifier in a display device.

2. The method of claim 1 wherein said step E) displays the characteristic information by embedding it in the vicinity of the identifier or overlapping in the vicinity of the position of the identifier inside the document data, or by making it available as a list.

3. The method of claim 2 wherein said step (B) is for specifying an identifier related to said selection in target document data that contains invisibly described texts created by the document creator; and said step (E) is for displaying said searched characteristic information, when the identifier is included in the invisibly described text data, in the vicinity of the invisible identifier or on a previously established position.

4. The method of claim 1 wherein said data library defines at least any one of the followings as matters-of-interest: products, foodstuffs, music, books, CDs, DVDs, plants / animals, interiors, clothes / ornaments, computer related equipment, software, industrial goods, parts, members, tools, toys, collections, vehicles, real estate, people, schools, companies, countries, place names (regions), transportation facilities, routes, roads, political parties, sports types/ stadiums / tournament names/concerned bodies/concerned parties, entertainment types such as music and movies/theater/performance locations/titles/concerned bodies such as promoters or patrons/concerned parties, illnesses, health, incidents, religions, political ideas, history, sayings, education plans, qualifications, quizzes, services, or intellectual property,
as elements: at least any one of information that makes up each matter-of-interest, information that is included in each matter-of-interest, or information that specifies a matter-of-interest,
as identifiers: document data such as character strings, symbols, numeric values, word lists, or character string patterns which are included in elements of a matter-of-interest and / or which identify one or more elements of a matter-of-interest,
and as characteristic information: at least any one of the following information: shapes / measured values / performance / specifications pertaining to a matter-of-interest, information in the past/present/future forecast pertaining to a matter-of-interest, evaluations or introductory information by third parties pertaining to a matter-of-interest, information that shows the completion or processing until establishment pertaining to a matter-of-interest, information related people and related parties such as schools, research facilities, companies, and self-governing bodies pertaining to a matter-of-interest, or ranking information of multiple matters-of-interest or multiple elements within a matter-of-interest.

5. The method of claim 1 wherein said step (D) sets up a hyperlink for accessing related information regarding an element of the matter-of-interest in the characteristic information and/or identifier.

6. The method of claim 5 wherein said step (D) sets up a hyperlink in which identification information of the creator of a target document is embedded.

7. The method of claim 5 wherein said data library stores characteristic information of the creator of a document in association with the identification information of the creator, and
said control unit further executes the steps for
(F) detecting creator identification information that is visibly or invisibly described within a target document by the creator of the document and,
(G) searching out characteristic information related to the document creator from said data library when the creator identification information is detected,
wherein said step (D) sets up a hyperlink for accessing related information regarding said matter-of-interest element in the characteristic information including said characteristic information of the creator and/or identifier.

8. The method of claim 1 wherein said control unit executes a step (H) for detecting control command information regarding the display of characteristic information, which is embedded invisibly by the creator of a document in a target document,
wherein said step (D) comprises a step of processing characteristic information extracted from a data library according to said detected control command information.

9. The method of claim 1 wherein said step (C) comprises a step for searching out characteristic information and related information of an element of a matter-of-interest from said data library and dynamically creating other characteristic information based on this information.

10. The method of claim 9 wherein said step (C) dynamically creates characteristic information such as images, graphs, animations, or animations based on the characteristic information and related information searched out from said data library.

11. The method of claim 1 wherein said memory device stores user information such as languages used by users, residential areas, health history/conditions, hobbies, and display formats of characteristic information in association with the identification information of each user and,
said step (C) searches or dynamically creates characteristic information and related information of an element of a matter-of-interest from said data library based on said identifier specified in target document data and said user information.

12. The method of claim 1, wherein when multiple identical identifiers are specified in a target document, said step (E) displays characteristic information in the vicinity of one or more of the specified multiple identifiers and also displays a symbol near the rest of the identifiers indicating that they are said specified identifiers.

13. A system for displaying information related to document data along with the document, having an input device, a display device, a memory device, a unit for reading document data, and a control unit, comprising:
a data library that stores and associates among each other a matter-of-interest, elements related to this matter-of-interest, an identifier specifying each of such elements, characteristic information of each of such elements, and information
related to each of such elements;
a unit for receiving from said input unit the selection of the matter-of-interest to be extracted from the document data,
a unit for specifying an identifier pertaining to the selection in the document data read by the reading unit,
a unit for searching out characteristic information and related information of the element of said matter-of-interest associated with the specified identifier from the data library,
a unit for setting up the searched characteristic information and/or identifier, so as to allow the related information regarding the element of the matter-of-interest to be viewable based on said characteristic information and / or specified identifier, and
a unit for displaying said characteristic information in association with the identifier in a display device.

14. A computer software program stored in a memory unit of a computer system for causing the computer system to execute the processing of displaying document data, comprising the steps of:
A) receiving from the input unit the selection of a matter-of-interest to be extracted from document data,
B) specifying an identifier pertaining to the selection in the document data read by the reading unit,
C) searching out characteristic information and related information of an element of said matter-of-interest associated with the specified identifier from the data library in the said memory unit that stores and associates among each other a matter-of-interest, elements related to this matter-of-interest, an identifier specifying each of such elements, characteristic information of each of such elements, and information related to each of such elements,
D) setting up the searched characteristic information and/or identifier, so as to allow the related information regarding the element of the matter-of-interest to be viewable based on said characteristic information and / or specified identifier, and
E) displaying said characteristic information in association with the identifier in a display device.
